Europäisches Patentamt

(19) European Patent Office

Office européen des brevets

(11) Numéro de publication: **0 086 715**
**B1**

(12) **FASCICULE DE BREVET EUROPEEN**

(45) Date de publication du fascicule du brevet:
**19.06.85**

(21) Numéro de dépôt: **83400290.9**

(22) Date de dépôt: **11.02.83**

(51) Int. Cl.⁴: **C 03 B 37/16**

(54) **Fabrication d'un mélange de fibres minérales de longueurs déterminées.**

(30) Priorité: **12.02.82 DE 3205108**

(43) Date de publication de la demande:
**24.08.83 Bulletin 83/34**

(45) Mention de la délivrance du brevet:
**19.06.85 Bulletin 85/25**

(84) Etats contractants désignés:
**AT BE CH FR GB IT LI LU NL SE**

(56) Documents cités:
**DE - B - 1 008 880**
**FR - A - 1 473 851**
**FR - A - 2 384 870**

(73) Titulaire: **ISOVER SAINT-GOBAIN, Les Miroirs 18, avenue d'Alsace, F-92400 Courbevoie (FR)**

(72) Inventeur: **Kummermehr, Hans, Prinzregentenstrasse 25A, D-6700 Ludwigshafen (DE)**

(74) Mandataire: **Leconte, Jean-Gérard et al, Saint-Gobain Recherche 39, Quai Lucien Lefranc, F-93304 Aubervilliers Cedex (FR)**

**Description**

L'invention a pour objet un procédé de fabrication d'un mélange de fibres minérales, en particulier mélange homogène, exempt de fibres agglomérées et dans lequel les longueurs des fibres sont réparties de façon déterminée à l'avance.

On utilise, notamment comme fibres de reforcement de nombreux produits composites, des fibres minérales dont le diamètre est situé entre 1 µm et 15 µm. Pour pouvoir les employer en tant que renfort pour la fabrication de papier, de carton, de revêtement de sols, ou de garnitures de freins, etc., il faut disposer d'un mélange de fibres individuelles dont les longueurs s'inscrivent dans un domaine déterminé, aussi bien à cause d'une moindre efficacité de fibres dont la longueur se situe en dehors de ce domaine, que pour obtenir d'elles un comportement déterminé au cours de la fabrication envisagée. Lors de l'emploi de fibres minérales en tant qu'additifs dans la fabrication du papier, aussi bien que lors de la production de produits de remplacement du papier d'amiante, une longueur de fibres inférieure à 0,25 mm environ ne permet pas d'obtenir un effet d'armature suffisant; d'autre part, avec une longueur supérieure à 4 mm environ, il apparaît au cours du traitement un phénomène d'agglomération des fibres qui provoque dans le produit des hétérogénéités que l'on ne peut supprimer, même par mise en suspension.

Toutes sortes de procédés sont connus pour fragmenter des fibres minérales se présentant de façon irrégulière sous forme de laine minérale. En pratique, on recourt couramment à l'utilisation de broyeurs à lames, à masselottes ou à boulets. Il s'est toutefois avéré que, par fragmentation dans des broyeurs possédant des organes de fragmentation rotatifs, on ne peut empêcher les fibres de s'agglomérer, surtout les fibres fines, mais aussi jusqu'à 15 µm de diamètre. En effet, à cause de leur mouvement relatif, les fibres s'accrochent entre elles et forment des grains que l'on ne peut plus détruire, même dans l'eau. D'autre part, l'utilisation d'un broyeur à boulets exige que les fibres y séjournent assez longtemps pour en fragmenter effectivement une proportion suffisante. Par cette méthode, une quantité considérable le fibres est en outre pratiquement réduite en poudre, leur fragments devenant donc inaptes à constituer une armature.

On sait par la publication DE-A-2 811 983, diviser une bande de laine minérale en lui faisant traverser la fente d'un broyeur à rouleaux afin d'augmenter assez la densité des chutes récupérées lors de la fabrication des matelas de fibres minérales pour pouvoir plus facilement les réintroduire dans la composition en fusion.

Ce principe repose sur l'observation qu'on facilite grandement l'apport des fibres dans la composition en fusion lorsque la majorité des fibres fractionnées ont une longueur inférieure à 0,3 mm. On obtient cette fragmentation en appuyant sur l'un des rouleaux du broyeur à rouleaux par l'intermédiaire d'un vérin, sous une force donnée, de 25 kN par exemple, pour fermer la fente de laminage, de sorte que les fibres minérales mises en flexion par pressage en traversant cette fente se cassent en petits morceaux. Pour opérer selon le DE-A-2 811 983, des forces de pression très élevées sont ainsi nécessaires, du simple fait que le matelas de fibres minérales qui doit être broyé est introduit dans la fente avec une épaisseur de plusieurs centimètres.

On a également déjà essayé dans la pratique d'utiliser de tels broyeurs à rouleaux, non seulement pour remplacer des broyeurs à boulets afin de fragmenter des matériaux fibreux en fibres de dimensions les plus faibles possibles, mais surtout pour obtenir une répartition déterminée de longueur des fibres. Il s'est toutefois avéré que, par le choix d'une fente de faible épaisseur, à laquelle on amène corrélativement un matelas de fibres peu épais, on pouvait éviter une fragmentation excessive conduisant à des longueurs de fibres inférieures à 0,25 mm environ, mais que l'on obtenait ainsi une proportion beaucoup trop importante de fibres trop longues: les fibres situées parallèlement à la fente entre les rouleaux peuvent passer à travers, dans les cas limites, sans subir aucune destruction et à l'extrême conserver une longueur de plusieurs centimètres à la sortie de l'opération.

L'invention a donc pour objet de proposer un procédé de fabrication d'un mélange de fibres minérales, particulièrement homogène et exempt de fibres agglomérées, dont les fibres ont des longueurs réparties de façon déterminée, selon lequel on écrase un mélange de départ de fibres minérales qui contient un certain nombre de fibres plus longues que la longueur maximale désirée, pour les fragmenter. Selon l'invention, le mélange de départ de fibres minérales est granulé, puis soumis à l'écrasement sous cette forme. On peut ainsi fabriquer un mélange de fibres minérales d'une longueur moyenne relativement importante, par exemple plus de 0,25 mm, en particulier plus de 0,5 mm, ou dont le pic de répartition des longueurs se trouve au dessus de 0,25 mm et en particulier au dessus de 0,5 mm, mais avec une faible dispersion de cette répartition.

On peut procéder à l'écrasement par passage des granulés à travers une fente de laminage. On évite, en broyant dans cette fente des granulés et non plus un matelas, que les longues fibres ne viennent se loger parallèlement à la fente, échappant ainsi à la fragmentation, comme cela se produisait. Ces fibres plus longues se trouvent au contraire prises dans les granulés, avec un nombre correspondant élevé de courbures et d'entrelacements, de sorte qu'on est sûr d'en obtenir une rupture multiple sous l'effet de l'écrasement. Le diamètre des granulés est ainsi un premier paramètre influant sur la longueur des fibres après fragmentation. La valeur de la charge d'écrasement en est un autre, d'ailleurs dépendant du diamètre, de sorte que, dans chaque cas particulier, on peut adapter ces paramètres par des essais de façon à obtenir la répartition désirée des longueurs des fibres.

Il est, en tous cas, essentiel à cet égard que le diamètre des granulés, en règle générale de l'ordre de quelques millimètres, conduise à un entrelacement multiple des fibres les plus longues, garantissant ainsi que les fibres longues, de façon correspondante, soient soumises en plusieurs endroits à une flexion conduisant à une rupture certaine.

De façon particulièrement avantageuse, on ne comprime pas les granulés sous une force déterminée mais jusqu'à une épaisseur minimale donnée, inférieure au plus petit diamètre qu'ils possédaint avant l'écrasement, pour garantir à coup sûr un effort d'écrasement suffisant mais apte à éviter une fragmentation trop poussée. En tous cas, l'épaisseur atteinte par les granulés correspond à plusieurs fois le diamètre des fibres. En comprimant des granulés de diamètre déterminé à l'avance à une épaisseur finale déterminée à l'avance, on crée une possibilité supplémentaire plus précise d'influer sur les longueurs des fibres ainsi brisées. En reliant un diamètre déterminé des granulés à une épaisseur déterminée de la fente d'écrasement, on peut, selon les cas, fixer dans un domaine assez étroit la répartition de longueur des fibres brisées.

Selon une des caractéristiques de l'invention, le diamètre des fibres est compris entre 1 et 10 μm, tandis que l'épaisseur d'écrasement minimale se situe entre 0,05 mm et 0,3 mm, de préférence aux environs de 0,2 mm soit de 20 à 200 fois le diamètre des fibres. La taille des granulés est comprise de préférence entre 2 et 15 mm, dépassant d'autre part plusieurs fois l'épaisseur de la fente ou l'épaisseur d'écrasement minimale, de sorte que la compression relativement importante des granulés provoque la rupture des fibres. Ceci garantit que les granulés sont pratiquement détruits dans toute leur masse et que les fibres coupées ne peuvent dans une proportion notable, ni demeurer sous forme agglomérée, ni créer de nouveaux agglomérats.

Les fibres sont alors pour ainsi dire amenées en vrac sous forme de granulés dans la fente qu'elles quittent fragmentées et séparées sans qu'aucune mesure supplémentaire de séparation ne soit nécessaire.

On peut aussi influer sur le réglage de la répartition des longueurs des fibres obtenues selon l'invention, en appliquant en même temps que l'effort d'écrasement un effort de cisaillement de direction perpendiculaire à celle de l'écrasement. En pratique, on peut par exemple obtenir ce résultat en faisant tourner les rouleaux à des vitesses différentes. Ainsi, on introduit dans les granulés des efforts supplémentaires, dont l'influence ne peut être évaluée d'emblée, mais on peut toutefois établir par quelques essais dans chaque cas particulier, une valeur optimale de l'effort de cisaillement, en choisissant d'une part le coefficient de frottement de la surface des rouleaux et d'autre part la différence de vitesse, voire en imposant un mouvement transversall relativ donné. On peut toujours ainsi faire en sorte que les granulés ou certaines de leurs parties, soient soumis au cours de l'écrasement à un mouvement de rotation qui amène continuellement de nouvelles fibres pour les mettre en flexion au contact de la surface des rouleaux, si bien que l'homogénéisation des fibres augmente indépendamment de leur orientation initiale dans les granules.

Pour que les effets des forces exercées dans la fente soient reproductibles, il est essentiel que les granulés présentent un diamètre et une consistance aussi uniformes que possible car des diférences considérables des diamètres conduisent naturellement à des effets différents des forces. Dans une forme préférée de l'invention, on sépare le mélange initial de fibres minérales, avant la granulation, en flocons de fibres contenant chacun la quantité de fibres correspondant à chaque granulé à fabriquer. Il en résulte, fort avantageusement, que chaque flocon, puisqu'il enferne la masse de fibres voulue pour un granulé, se transforme, au cours du processus, en granulé, et donc les granulés ainsi créés se présentent de façon homogène.

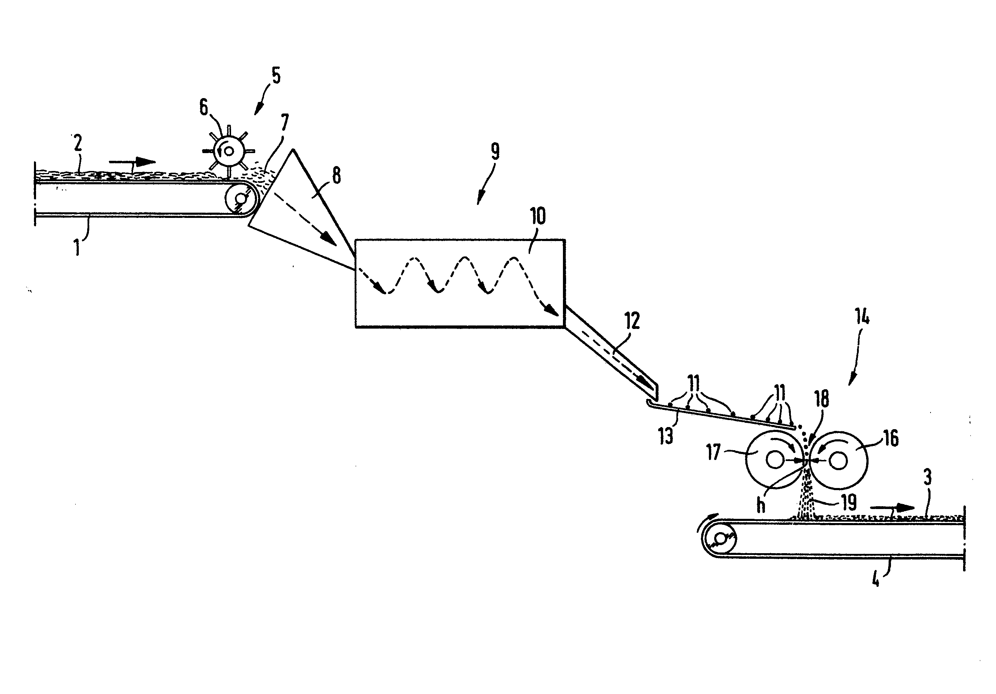

D'autres détails, avantages et fracticularités de l'invention apparaîtront au cours de la description suivante d'une forme de mise en œuvre l'invention en relation avec la figure.

L'unique figure jointe représente de façon simplifiée une installation de mise en oeuvre du procédé selon l'invention.

On introduit sur un convoyeur 1 un matelas de fibres minérales 2 d'épaisseur et de consistance appropriées, qui constitue le mélange initial de fibres minérales. Le matelas de fibres minérales contient des fibres de longueur pouvant aller jusqu'à plusieurs centimètres grâce à quoi en général il s'établit une certaine cohésion du matelas de fibres minérales 2 par entrecroisement des longues fibres.

Le matelas de fibres minérales 2 qui constitue le mélange initial de fibres minérales doit se transformer en un mélange 3 de fibres minérales aussi homogène et exempt de fibres agglomérées que possible, ledit mélange étant, dans l'exemple décrit, évacué sur le tapis convoyeur 4. Le mélange de fibres minérales 3 doit ici contenir exclusivement ou presque des fibres de longueur comprise entre 0,25 et 4 mm et sert par exemple comme produit de remplacement des fibres d'amiante dans le renforcement du papier ou du carton.

Dans l'installation représentée sur la figure, le matelas de fibres minérales 2 qui constitue le mélange initial de fibres minérales est tout d'abord conduit à un poste de formation des flocons 5 qui peut par exemple comprendre une roue à pointes 6, qui divise le matelas de fibres minérales 2 ainsi introduit en flocons distincts représentés schématiquement en 7. On transfère ces flocons par une trémis d'alimentation vers un poste de granulation 9. Ce poste comprend, dans l'exemple décrit, un tambour de granulation 10 connu en soi, travaillant en continu, qui fait défiler les flocons 7 de gauche à droite selon la figure et délivre à sa sortie des granulés 11. Les granulés 11 atteignent par une goulotte 12 un transporteur 13 approprié et de là pénètrent dans une station de broyage 14. Cette station peut être constituée d'un broyeur à rouleaux 15, qui comprend des rouleaux presseurs 16 et 17, lesquels créent une fente 18 dont l'épaisseur h (calculée entre la périphérie des rouleaux) est réglable et préalablement déterminée. Les granulés 11 sont rompus dans la fente 18 de sorte que les fibres fragmentées représentées en 19 tombent sur le convoyeur 4 sans former d'agglomérats pour constituer le mélange de fibres minérales 3.

Dans l'installation décrite à titre d'exemple, le mode de fonctionnement du poste 5 de formation des flocons est réglé de telle sorte que la quantité de fibres que renferment les flocons 7 ainsi obtenus correspond à celle des granulés 11 formés au cours de l'étape de granulation en 9; on peut ainsi dans une large mesure déterminer à l'avance par son réglage le diamètre des granulés. Les granulés 11, dont les diamètres sont situés dans une fourchette déterminée relativement étroite, par exemple aux alentours de 5 mm, sont intensément brisés dans la fente 18, du fait que l'épaisseur h de la fente 18 est considérablement plus faible que le diamètre des granulés 11, par exemple de l'ordre de 0,2 mm. En communiquant aux rouleaux presseurs 16 et 17 des vitesses de rotation différentes, on produit un effort de cisaillement entre le côté supérieur et le côté inférieur des agglomérats 11 au cours de l'écrasement, si bien qu'un mouvement de tournoiement des granulés se superpose à leur compression. Ainsi l'orientation des diverses fibres individuelles dans les granulés 11 est modifiée au contact de la surface des rouleaux presseurs 16 et 17 au cours de l'écrasement. Il se produit un effet de fragmentaiton supplémentaire, indépendant de leur position de départ dans les granulés 11, et également un certain cisaillement de chaque fibre renforce encore cet effet.

La valeur de ce mouvement de rotation ou du cisaillement imposé aux granulés 11 peut être réglée en choisissant une différence de vitesse appropriée entre les rouleaux presseurs 16 et 17 ainsi que le coefficient de frottement de leur surface, par exemple, en leur appliquant un revêtement de matière plastique, de caoutchouc ou d'autres matériaux.

Il va de soi que le montage représenté ne l'est qu'à titre d'exemple, et que le poste 5 de formation des flocons, le poste 9 de granulation et le poste 14 d'écrasement peuvent également être réalisés de toute autre manière convenant pour la mise en œuvre de l'invention. Ainsi le poste de granulation 9 peut aussi être formé d'un moulin, avec ou sans interposition d'un poste 5 de formation de flocons, et parallèlement à la formation des granulés 11, un fractionnement des fibres, inévitable dans la plupart des moulins, peut déjà se produire.

La suite de la description donne trois exemples de réglage du diamètre des granulés et de l'épaisseur h de la fente 18.

On part dans les trois cas d'un même mélange de fibres minérales.

### Exemple 1

Le diamètre des granulés 11 est réglé entre 3 et 5 mm. L'épaisseur h de la fente 18 est fixée à 0,1 mm. On obtient un mélange homogène, sans agglomérats, de fibres de longueur comprises entre 0,25 et 0,75 mm.

### Exemple 2

La taille des granulés 11 étant inchangée, on modifie l'épaisseur h de la fente 18 en la fixant à 0,2 mm, tous les autres paramètres demeurant inchangés. On obtient alors un mélange de fibres également homogène et sans agglomérats, dont la longueur est comprise entre 0,25 et 2 mm.

### Exemple 3

On fait passer le diamètre des granulés 11 dans une fourchette comprise entre 5 et 10 mm, tandis que l'épaisseur h de la fente 18 demeure inchangée à 0,2 mm. On obtient alors un mélange de fibres homogène et sans agglomérats, de longueur comprise entre 0,25 et 4 mm. Un tel mélange de fibres minérales est tout particulièrement approprié pour le renforcement du papier, du carton, des revêtements de sol, des garnitures de freins, etc. En effet, d'une part la longueur minimale des fibres de 0,25 mm produit encore un effet significatif d'armature, et d'autre part, la longueur maximale de 4 mm permet encore de créer une suspension sans apparition d'agglomérats lorsque le mélange de fibres minérales est mis dans l'eau. En outre, cette valeur de 4 mm de longueur de fibres est tout à fait suffisante pour l'ancrage des fibres dans les applications envisagées. Une plus grande longueur de fibres ne l'améliorerait pas sensiblement et ne contribuerait donc pas non plus à renforcer sensiblement mieux le produit.

### Revendications

1. Procédé de fabrication d'un mélange de fibres minérales, particulièrement homogène et exempt de fibres agglomérées, dont les fibres ont des longueurs réparties de façon déterminée à l'avance, selon lequel on soumet un mélange initial de fibres minérales qui contient un certain nombre de fibres plus longues que la longueur maximale désirée, à un écrasement qui fragmente les fibres, caractérisé en ce que le mélange initial de fibres minérales est granulé puis soumis à un écrasement sous cette forme.

2. Procédé selon la revendication 1, caractérisé en ce que l'écrasement s'effectue par passage dans une fente de laminage.

3. Procédé selon la revendication 1ou 2, caractérisé en ce qu'on obtient l'écrasement par compression des granulés jusqu'à une épaisseur d'écrasement minimale donnée inférieure au plus petit des diamètres qu'ils possédaient avant l'écrasement mais qui correspond toutefois à plusieurs fois le diamètre des fibres.

4. Procédé selon l'une des revendications 1, 2 ou 3, caractérisé en ce que le diamètre des fibres est compris entre 1 et 10 μm.

5. Procédé selon l'une des revendications 1 à 4, caractérisé en ce que le diamètre des granulés est compris entre 2 et 15 mm.

6. Procédé selon la revendication 5, caractérisé en ce que le diamètre des granulés est compris entre 5 et 10 mm.

7. Procédé selon l'une des revendications 1 à 6, caractérisé en ce que l'épaisseur d'écrasement minimale atteinte est comprise entre 0,05 et 0,3 mm.

8. Procédé selon la revendication 7, caractérisé en ce que l'épaisseur d'écrasement minimale est comprise entre 0,1 et 0,25 mm.

9. Procédé selon l'une des revendications 1 à 8, caractérisé en ce qu'on applique simultanément à la charge d'écrasement un effort de cisaillement dont la direction est perpendiculaire à celle de l'écrasement.

10. Procédé selon une des revendications 1 à 9, caractérisé en ce que le mélange initial de fibres minérales est, avant la granulation, séparé en flocons contenant chacun la quantité de fibres correspondant à chaque granulé à fabriquer.

## Patentansprüche

1. Verfahren zur Erzeugung eines insbesondere homogenen und agglomeratfreien Mineralfasergemisches, dessen Fasern eine vorgegebene Längenverteilung haben, bei dem ein Mineralfaser-Ausgangsgemisch, welches einen gewissen Gehalt an gegenüber der gewünschten Länge längeren Fasern aufweist, einer Quetschung ausgesetzt wird, die die Fasern verkleinert, dadurch gekennzeichnet, daß das Mineralfaser-Ausgangsgemisch granuliert wird und dann in dieser Form der Quetschung ausgesetzt wird.

2. Verfahren nach Anspruch 1, dadurch gekennzeichnet, daß die Quetschung durch Hindurchführung in einem Walzenspalt erzeugt wird.

3. Verfahren nach Anspruch 1 oder 2, dadurch gekennzeichnet, daß die Quetschung durch Zusammendrückung der Granulatkörper auf eine vorbestimmte minimale Zusammendrückungshöhe erzeugt wird, die geringer ist als der kleinste Durchmesser, den sie vor der Quetschbelastung aufweisen, jedoch einem Mehrfachen des Faserdurchmessers entspricht.

4. Verfahren nach einem der Ansprüche 1, 2 oder 3, dadurch gekennzeichnet, daß der Durchmesser der Mineralfasern zwischen 1 und 10 μm liegt.

5. Verfahren nach einem der Ansprüche 1 bis 4, dadurch gekennzeichnet, daß der Durchmesser der Granulatkörper zwischen 2 und 15 mm liegt.

6. Verfahren nach Anspruch 5, dadurch gekennzeichnet, daß der Durchmesser der Granulatkörper zwischen 5 und 10 mm liegt.

7. Verfahren nach einem der Ansprüche 1 bis 6, dadurch gekennzeichnet, daß die erreichte minimale Zusammendrückungshöhe zwischen 0,05 und 0,3 mm liegt.

8. Verfahren nach Anspruch 7, dadurch gekennzeichnet, daß die minimale Zusammendrückungshöhe zwischen 0,1 und 0,25 mm liegt.

9. Verfahren nach einem der Ansprüche 1 bis 8, dadurch gekennzeichnet, daß zugleich mit der Quetschbelastung eine Scherbelastung aufgebracht wird, deren Richtung senkrecht zu der der Quetschung ist.

10. Verfahren nach einem der Ansprüche 1 bis 9, dadurch gekennzeichnet, daß das Mineralfaser-Ausgangsgemisch vor der Granulierung zu Flocken mit einem den herzustellenden Granulatkörpern entsprechenden Fasergehalt vereinzelt wird.

## Claims

1. Process for making a mixture of mineral fibres, which is particularly homogeneous and free from agglomerated fibres and contains fibres with a specific range of length determined in advance according to which an initial mixture of mineral fibres, which contains some fibres with a length exceeding a desired maximum is crushed to fragment the fibres, characterized in that the initial mixture of mineral fibres is granulated and is then crushed under this form of granules.

2. Process according to claim 1, characterized in that the crushing is obtained by passing through a laminating slot.

3. Process according to one of claims 1 to 2, characterized in that the crushing is obtained by compression of the granules until a given minimal crushing-deepth which is less than the smallest diameter that they had before the crushing but which actually corresponds to several times the diameter of the fibres.

4. Process according to one of claims 1 to 3, characterized in that the diameter of the fibres is comprised between 1 to 10 micrometer.

5. Process according to one of claims 1 to 4, characterized in that the diameter of the granules is comprised between 2 and 15 mm.

6. Process according to claim 5, characterized in that the diameter of the granules is comprised between 5 and 10 mm.

7. Process according to one of claim 1 to 6, characterized in that the reached minimal crushing-deepth is comprised between 0,05 and 0,3 mm.

8.Process according to claim 7, characterized in that the reached minimal crushing-deepth is comprised between 0,1 and 0,25 mm.

9. Process according to one of claims 1 to 8, characterized in that simultaneously to the crushing-load a shearing stress is applied perpendicular to the crushing direction.

10. Process according to one of claims 1 to 9, characterized in that before the granulation the initial mixture of mineral fibres is separated as tufts each containing the quantity of fibres corresponding to each granule to make.

7